Europäisches Patentamt

European Patent Office

Office européen des brevets

(19)

(11) Publication number: 0 281 986

A2

# (12) EUROPEAN PATENT APPLICATION

(21) Application number: 88103485.4

(22) Date of filing: 05.03.88

(51) Int. Cl.⁴: **A23C 11/00** , **A23L 1/04**

(30) Priority: 13.03.87 CA 531944

(43) Date of publication of application:
**14.09.88 Bulletin 88/37**

(84) Designated Contracting States:
**AT DE FR GB IT NL SE**

(71) Applicant: **Abrams, Aubrey Leon**
**95 Advance Road**
**Toronto Ontario, M8Z 2T2(CA)**

(72) Inventor: **Abrams, Aubrey Leon**
**95 Advance Road**
**Toronto Ontario, M8Z 2T2(CA)**

(74) Representative: **Galgut, John**
**c/o Gouldens 22 Tudor Street**
**London EC4Y 0JJ(GB)**

(54) **Non-dairy creamer/whitener.**

(57) A non-dairy creamer comprises an aqueous so-
lution of carrageenan and/or xanthan gum, sucrose,
flavouring, sodium benzoate and colouring matter.
The water comprises at least 98% of the solution.
Other stabilizers including guar, locust bean, karaya,
acacia, tragacanth may be substituted for the car-
rageenan and xanthan gum. The mixure is homo-
genised at hight pressure.

EP 0 281 986 A2

This invention relates to non-dairy creamers and in particular to liquid non-dairy creamers.

Non-dairy creamers, or as they are sometimes referred to, coffee and beverage whiteners, have been known for a number of years. Such known creamers comprise water, vegetable oil, sugar and/or glucose solids, emulsifiers and artificial flavours and colours. These creamers tend to have an artificial flavour when used known as an after taste. Furthermore the creamers have a calorific value of about 40 calories per ounce which in practice means that each half ounce serving has a value of about 20 calories. In addition modern dietetic thinking is that it is desirable to minimise the amount of vegetable oils that are consumed generally and to restrict additives and emulsifiers which are required to keep oils in suspension.

It is an object of the present invention to minimise the calorific value of creamers or whiteners and also to reduce the consumption of oils and emulsifiers in conformity with modern day requirements.

According to an aspect of the present invention there is provided a method of producing a non-dairy creamer including hydration of a stabiliser e.g. a vegetable gum or carrageenan and food colouring in water and homogenising the mixture so that it has a creamy consistency. I have found that controlling the homogonisation at 2000 to 3000 pounds per square inch tends to stabilize the mixture so that solubalisation and suspension of the mix is improved and smoothness and creaminess of the whitener are enhanced preventing curdling out of the ingredients so that there is a satisfactory mix in the beverage.

The stabilizer that may be used is preferably a vegetable gum selectedfrom the group comprising xanthan, guar, locust bean, karaya, acacia, tragacanth, carrageenen and alginate. The preferred stabilizer is carrageenan, preferably of the iota type. Two or more of the abovementioned gums may be incorporated in the mixture. A flavouring agent is preferably also used with the mixture.

The proportions of the various ingredients and the amount of water used may vary in practice but experimentation will show which are the preferred proportions. Where the gum is carrageenan, then in order to maintain the correct viscosity, the amount of carrageenan is preferably between about 0.2 to 0.3 grams per litre of water, the lower limit being determined to give suitable homogenisation without separation of the mixture and the upper limit being determined by taste and also by that amount which makes the mixture too viscous.

Sucrose or other sweeteners such as sugars or dextrose may be added as a sweetening agent together with other flavouring agents. However such sweeteners are preferably not added in excess of 0.5 grams/litre of water.

The active ingedients preferably comprise no more than 2% of the total aqueous mixture. The carbohydrates preferably do not exceed 1.5% by weight of the total aqueous mixture.

In order to illustrate the present invention, reference is made to the following non-limiting examples.

EXAMPLE 1

A dry mix is prepared by dry blending the following ingredients:-

Carrageenan 0.2g
Sucrose 0.4g
Flavouring 0.2g
Sodium Benzoate 0.1g
Colouring matter 0.4g

The mix is added to 98.7g water and the mixture is thoroughly homogenised at 2000 pounds per square inch. The beverage whitener thus prepared is ready to use. The whitener or creamer may be frozen to obtain extended shelf life.

EXAMPLE 2

A whitener or creamer is prepared as described in example 1. It is then pasteurised at 180°F for up to thirty minutes and packed in aseptic containers. This product has a lengthy shelf life without requiring freezing.

EXAMPLE 3

A dry mix is prepared by dry blending the following ingredients:-

Xanthan gum 0.2g
Aspartame 0.4g
Flavouring 0.2g
Sodium Benzoate 0.1g
Colouring matter 0.4g

The mix is added to 99.098g water and the mixture is thoroughly homogenised at 2000 pounds per square inch. The beverage whitener thus prepared is ready to use. The whitener or creamer may be frozen to obtained extended shelf life.

EXAMPLE 4

A dry mix is prepared as in example 3, but instead of xanthan gum, alginate is used.

## EXAMPLE 5

A dry mix is prepared by dry blending the following ingredients:-

Carrageenan    0.1g
Xanthan Gum    0.1g
Sucrose    0.4g
Flavouring    0.2g
Sodium Benzoate    0.1g
Colouring matter    0.4g

The mix is added to 98.7g water and the mixture is thoroughly homogenised at 2000 pounds per square inch. The beverage whitener thus prepared is ready to use. The whitener or creamer may be frozen to obtain extended shelf life.

The preparations of examples 3 and 4 may also be treated as described in example 2.

Sucrose or other sweeteners such as sugars or dextrose may be added as a sweetening agent together with other flavouring agents. However such sweeteners are preferably not added in excess of 0.5 grams/litre of water.

The carrageenan used is preferably of the iota type.

The active ingedients preferably comprise no more than 2% of the total aqueous mixture. The carbohydrates preferably do not exceed 1.5% by weight of the total aqueous mixture.

I have found that the liquid creamers or whiteners prepared in accordance with the examples enhance the flavour of beverages without leaving any aftertaste. Furthermore I have found that the total calorie count of the mixture is forty calories per litre, i.e. 4 calories per hundred millitres. The average serving of the whitener or creamers is about half an ounce or 15 millitres which has about 0.6 calories per serving or 1.2 calories per ounce of liquid beverage whitener or creamer.

Although preferred embodiments of the present invention have been described in conjunction with certain features, materials, ingredients and components, many suitable alternatives will be apparent to those skilled in the art of formulating food mixtures. Accordingly the invention is not to be restricted or limited except by the terms of the following claims.

## Claims

1. A method of producing non-dairy creamers including mixing a stabilizer and food colouring with water and homogenising the mixture so that it has a creamy consistency.

2. A method as claimed in claim 1 characterised in that the stabilizer from the group comprising xanthan, guar, locust bean, karaya, acacia, carrageenan and tragacanth.

3. A method as claimed in claim 2 characterised in that the stabilizer is carrageenan of the iota type.

4. A method as claimed in claim 1, 2 or 2 characterised in that the mixture is homogenised at 2000 pounds per square inch.

5. A non-dairy creamer including a mixture of stabiliser and food colouring and which has been homogenised to a creamy consistency.

6. A creamer as claimed in claim 5 characterised in that the stabilizer is selected from the group comprising xanthan, guar, locust bean, karaya, acaia and tragacanth.

7. A creamer as claimed in claim 5 characterised in that the stabilizer is carrageenan.

8. A creamer as claimed in claim 7 characterised in that the stabilizer is carrageenan of the iota type.

9. A creamer as claimed in claim 5 wherein the stabilizer is xanthan gum.

10. A creamer as claimed in any one of claims 5 to 9 characerised by the inclusion of a sweetener.

11. A creamer as claimed in any one of claims 5 to 10 which is an aqueous solution, characterised in that the liquid content of the solution is no less than 98%.

12. A creamer as claimed in any one of claims 5 to 11 which is an aqueous solution including carbohydrates, characterised in that the carbohydrates do not exceed 1.5% of the total acqueous mixture.